# FASCICULE DE BREVET EUROPEEN

(11) **EP 0 589 796 B1**
(45) Date de publication et mention de la délivrance du brevet: **11.02.1998**
(21) Numéro de dépôt: 93402332.6
(22) Date de dépôt: 24.09.1993
(51) Int. Cl.: B28D 1/04, B23D 47/02, B23D 59/02

(54) **Machine de coupe, notamment de carreaux, comprenant un moteur et un bâti monobloc**
Schneidmaschine, insbesondere für Fliessen, mit einem Motor und einem Monoblockmaschinengestell
Cutting machine, in particular for tiles, having a motor and a monobloc tool-carrying frame

(30) Priorité: 25.09.1992 FR 9211490
(43) Date de publication de la demande: 30.03.1994
(73) Titulaire: TOMECANIC, 78410 Aubergenville (FR)
(72) Inventeur: Berger, Jean-Marc, F-69530 Brignais (FR)
(74) Mandataire: Hasenrader, Hubert

(56) Documents cités:
- DE-A- 2 551 113
- FR-A- 2 497 717
- US-A- 3 008 462
- PATENT ABSTRACTS OF JAPAN vol. 4, no. 105 (M-23)(587) 26 Juillet 1980 & JP-A-55 065 023 (SHIBAURA SEISAKUSHO KK)

## Description

Il est connu par le FR-A-2 497 717 une machine de coupe, telle que notamment une machine à couper les carreaux de faïence, comprenant: un bâti, dans lequel sont ménagés des premier et deuxième compartiments séparés par une cloison étanche et comportant chacun un fond; un moteur d'entraînement contenu dans le premier desdits compartiments, muni d'un arbre d'entraînement, qui traverse ladite cloison étanche; et, un organe de coupe, tel qu'un disque de tronçonnage, contenu en partie dans le deuxième compartiment, et attelé audit arbre d'entraînement; le fond du deuxième compartiment étant situé à la partie inférieure de ce deuxième compartiment, de manière que celui-ci soit susceptible de contenir en outre un fluide d'humidification de l'organe de coupe; le fond du premier compartiment étant situé à la partie supérieure de ce premier compartiment qui est, en outre, ouvert à sa partie inférieure.

En d'autres termes les deux compartiments sont disposés tête-bêche l'ouverture de l'un étant placée sensiblement dans le plan du fond de l'autre et réciproquement et la cloison étanche qui les sépare leur est commune.

Le DE-A-25 51 113 décrit également une machine similaire.

Dans ces machines, le bâti est généralement constitué par une enceinte présentant un fond inférieur, une ouverture supérieure, divisée par une cloison étanche en deux compartiments. Cette enceinte est métallique, ainsi que la cloison de séparation, qui est fixée par soudures étanches. Le moteur est placé dans l'un des compartiments, l'organe de coupe étant placé dans l'autre compartiment.

Cette solution présente plusieurs inconvénients parmi lesquels doivent être notés les suivants:
- le mode de fabrication est coûteux;
- l'étanchéité des soudures de fixation de la cloison est difficilement obtenue et n'est, de ce fait, pas toujours satisfaisante;
- un risque d'accumulation de fluide d'humidification dans le compartiment contenant le moteur, et risque concomitant de dégradations dudit moteur.

L'invention entend remédier à cet état de choses et propose pour ce faire que la périphérie supérieure du bâti est conformée en une gouttière de récupération du fluide d'humidification de l'organe de coupe, reliée au fond du deuxième compartiment par une goulotte.

Les avantageuses dispositions suivantes sont en outre de préférence adoptées:
- les premier et deuxième compartiments constituent un ensemble monobloc, présentent, chacun, une ouverture opposée au fond dudit compartiment,
- ledit bâti est réalisé monobloc en un matériau plastique modelé par thermoformage ou par tout autre procédé équivalent.
- le moteur d'entraînement est un moteur électrique;
- la périphérie inférieure du bâti est conformée en un bord rabattu de renforcement;
- le bâti comprend deux cloisons externes le délimitant, qui s'étendent sensiblement perpendiculairement à ladite cloison étanche, et dans chacune desquelles est formée une cavité constituant une poignée de manipulation de la machine.

Les avantages principaux d'une machine de coupe conforme à l'invention sont, d'abord, la suppression du risque de dégradation du moteur due à une accumulation accidentelle de fuites du fluide d'humidification de l'organe de coupe, ensuite, lorsque le bâti est réalisé en un matériau plastique, l'élégance de sa réalisation qui est légère, peu coûteuse, tout en ayant une bonne résistance mécanique, et bien sûr, une complète insensibilité à la corrosion.

L'invention sera mieux comprise, et des caractéristiques secondaires et leurs avantages apparaîtront au cours de la description d'une réalisation donnée ci-dessous à titre d'exemple.

Il est entendu que la description et les dessins ne sont donnés qu'à indicatif et non limitatif.

Il sera fait référence aux dessins annexés, dans lesquels:

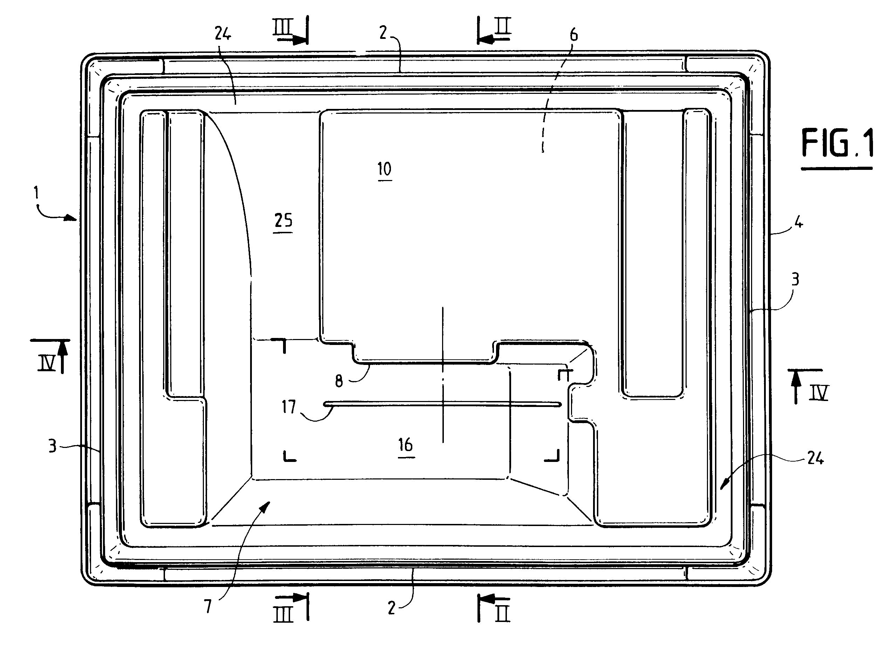

- la figure 1 est une vue de dessus du bâti d'une machine de coupe conforme à l'invention, non munie de ses équipements rapportés, par soucis de clarté de la représentation dudit bâti; et,

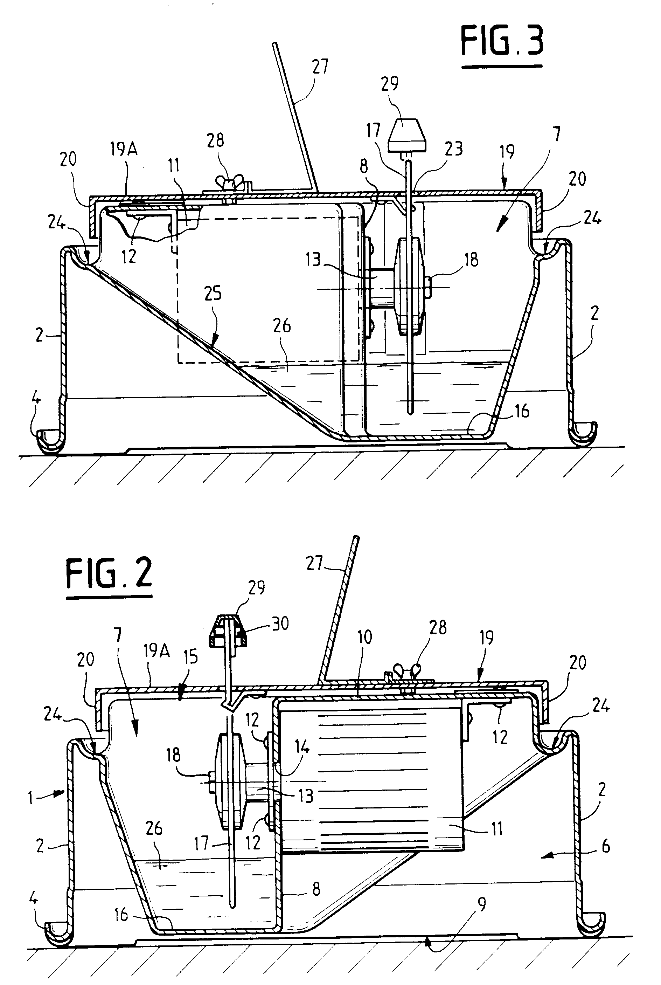

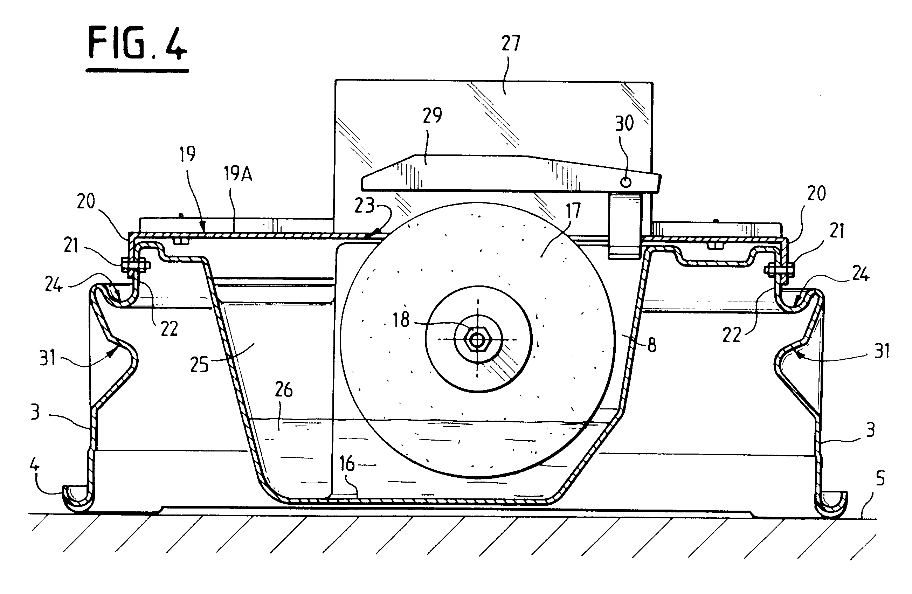

- les figures 2, 3 et 4 sont des coupes, respectivement suivant II-II, III-III, et IV-IV de la figure 1, avec représentation des équipements complémentaires montés sur le bâti.

La machine de coupe décrite est destinée à la coupe des carreaux de faïence, de grès, ou de matériaux analogues. Elle comporte à cet effet un disque rotatif de tronçonnage, comme cela va être observé ci-après. Il convient cependant dès maintenant de noter que la constitution générale d'une machine conforme à l'invention implique l'existence d'un organe de coupe entraîné par un moteur. Cet organe de coupe peut effectivement être un disque de tronçonnage, mais pourrait également être une scie, notamment une scie circulaire. C'est la raison pour laquelle la mention retenue par la suite est celle d'un organe de coupe.

La machine représentée comporte:
- un bâti 1, réalisé en un matériau plastique thermoformé, comprenant une jupe de forme parallèlipipédique ayant deux parois extérieures parallèles verticales 2 et deux autres parois extérieures perpendiculaires aux précédentes, également verticales 3, lesdites parois 2 et 3 présentant à leurs parties inférieures un bord rabattu 4 formant nervure de renforcement, dont la face inférieure des angles constitue la face d'appui de la machine de coupe sur un support 5, tel que le plateau d'un établi;
- à l'intérieur de cette jupe 2-3, le bâti comporte également deux compartiments 6, 7 possédant une cloison commune 8 verticale, parallèle aux cloisons 2;
- le premier compartiment 6 comporte une unique ouverture 9, inférieure, et un fond supérieur 10, et contient un moteur électrique 11 fixé d'une part sur le fond supérieur 10, d'autre part sur la cloison commune 8 par des organes de fixation 12, tels que des rivets, l'arbre horizontal 13 de ce moteur traversant avec étanchéité (un presse étoupe classique est prévu) un orifice 14 ménagé dans ladite cloison 8;
- le deuxième compartiment 7 comporte une unique ouverture 15, supérieure, et un fond inférieur 16, et contient un disque de tronçonnage 17 à axe horizontal, disque de tronçonnage 17 parallèle à la cloison commune 8, fixé 18 sur l'arbre 13 du moteur électrique 11, et, de cette manière monté rotatif;
- un cadre rigide 19, plan, est disposé horizontalement au-dessus du bâti 1, repose sur le fond supérieur 10 du premier compartiment 6, et comporte un bord rabattu vertical 20, qui en permet la fixation par des écrous 21 sur des parois de liaison 22 reliant la paroi des deux compartiments aux parois extérieures 3, le cadre 19 comportant en outre une fente 23 permettant le passage de la partie supérieure du disque de tronçonnage 17 qui dépasse légèrement la face supérieure plate 19A du cadre 19, constituant le plan de travail de la machine de coupe;
- la périphérie supérieure de la jupe 2-3 est conformée en une gouttière 24, disposée en-dessous du bord rabattu 20, destinée à la récupération du fluide d'humidification du disque de tronçonnage 17 susceptible de s'écouler sur la face 19A du cadre 19, vers le bord rabattu 20;
- une goulotte 25, relie la gouttière 24 au fond inférieur 16 du deuxième compartiment 7 et permet de véhiculer la plus grande partie du fluide d'humidification de la gouttière vers ledit fond 16 et à l'intérieur dudit deuxième compartiment 7, la partie inférieure du disque de tronçonnage 17 étant immergée dans ce volume 26 de fluide;
- deux petites cavités borgnes 31, ménagées dans chacune des parois 3, constituent deux poignées de manutention de la machine de coupe.

Il peut être également noté qu'un écran 27 est fixé sur la face supérieure 19A du cadre 19 au moyen d'un écrou papillon 28 et qu'un dispositif de protection 29 est disposé au-dessus du disque de tronçonnage 17, en étant monté pivotant autour d'un axe horizontal 30, afin d'avoir une position réglable.

Dans la réalisation représentée, l'ensemble de la jupe 2-3, des compartiments 6, 7 de la gouttière 24, et de la goulotte 25 est un ensemble monobloc réalisé en un matériau plastique thermoformé, à partir d'une seule plaque initiale.

Des réalisation équivalentes, également conformes à l'invention, consistent à former l'ensemble par emboutissage d'une tôle métallique, ou par moulage. Compte-tenu des diverses épaisseurs à prévoir, la solution décrite en matériau plastique thermoformé est préférée.

Il est d'ailleurs à noter que les premier (6) et deuxième (7) compartiments sont disposés tête-bêche: le fond 10 de l'un est disposé sensiblement dans le même plan que l'ouverture 15 de l'autre et vice versa pour le fond 16 de l'autre situé dans le plan de l'ouverture 9 du premier. La réalisation en matériau plastique convient bien à cette disposition.

La disposition principale reste bien celle-ci du premier compartiment 6, entièrement fermé, hormis son ouverture inférieure 9, à l'intérieur duquel le moteur 11 est évidemment bien protégé contre les projections de fluide d'humidification du disque de tronçonnage 17. Reste l'existence éventuelle de quelques fuites, minimes, entre l'arbre 13 du moteur et l'orifice de passage 14, malgré les presse étoupes ou joints d'étanchéité prévus. Du fait que le premier compartiment 6 ne possède pas de fond inférieur fermé, mais simplement une ouverture 9, de telles fuites éventuelles, d'une part ne s'accumuleront pas dans le premier compartiment, d'autre part, s'écouleront librement hors de celui-ci. La protection du moteur 11 est donc parfaite, ceci, quelque soit par ailleurs le mode de fabrication du bâti, qui, dans une réalisation également conforme à l'invention, pourrait être réalisé en mécano-soudé, c'est-à-dire en tôles soudées et/ou mécaniquement assemblées, mais avec la disposition tête-bêche des deux compartiments 6 et 7.

Il y a également lieu d'observer qu'une machine conforme à l'invention peut avoir un moteur choisi parmi plusieurs types différents (hydraulique, pneumatique, électrique), mais que lorsqu'une telle machine est équipée d'un moteur électrique, particulièrement sensible aux projections de liquides et aux vapeurs, cette machine de coupe devient particulièrement performante du fait de la suppression desdites projections et vapeurs obtenue par le choix de conformation du premier compartiment 6.

## Revendications

1. Machine de coupe, telle que notamment une machine à couper les carreaux de faïence, comprenant:
un bâti (1), dans lequel sont ménagés des premier (6) et deuxième (7) compartiments séparés par une cloison étanche (8) et comportant chacun un fond (10,16);
un moteur d'entraînement (11) contenu dans le premier (6) desdits compartiment, muni d'un arbre d'entraînement (13), qui traverse (14) ladite cloison étanche (8); et,
un organe de coupe (17), tel qu'un disque de tronçonnage, contenu en partie dans le deuxième compartiment (7), et attelé (18) audit arbre d'entraînement (13);
le deuxième compartiment (7) étant susceptible de contenir, en outre, un fluide (26) d'humidification de l'organe de coupe (17) et les deux compartiments (6, 7) étant disposés tête-bêche, l'ouverture de l'un étant placée sensiblement dans le plan du fond de l'autre, et réciproquement, et la cloison étanche (8) les séparant, leur étant commune, caractérisée en ce que la périphérie supérieure du bâti est conformée en une gouttière (24) de récupération du fluide d'humidification de l'organe de coupe, reliée au fond (16) du deuxième compartiment (7) par une goulotte (25).

2. Machine selon la revendication 1,
caractérisée en ce que les premier (6) et deuxième (7) compartiments constituent un ensemble monobloc, présentant, chacun, une ouverture (9, 15) opposée au fond (10, 16) dudit compartiment.

3. Machine selon l'une quelconque des revendications 1 et 2,
caractérisée en ce que ledit bâti (1) est réalisé monobloc en un matériau plastique modelé par thermoformage.

4. Machine selon l'une quelconque des revendications 1 à 3,
caractérisée en ce que le moteur d'entraînement (11) est un moteur électrique.

5. Machine selon l'une quelconque des revendications 1 à 4,
caractérisée en ce que la périphérie inférieure du bâti est conformée en un bord rabattu de renforcement (4).

6. Machine selon l'une des revendications 1 à 5,
caractérisée en ce que le bâti comprend deux cloisons externes (3) le délimitant, qui s'étendent sensiblement perpendiculairement à ladite cloison étanche (8), et dans chacune desquelles est formée une cavité (31) constituant une poignée de manipulation de la machine.

## Claims

1. A cutting machine, in particular, such as a machine for cutting ceramic tiles, the machine comprising:
a stand (1) in which first and second compartments (6, 7) are provided that are separated from each other by a leak-proof partition (8), each compartment having a respective bottom (10, 16);
a drive motor (11) contained in the first (6) of said compartments, the motor being provided with a drive shaft (13) that passes through (14) said leak-proof partition (8); and
a cutting member (17), such as a grinding wheel, contained in part in the second compartment (7) and coupled (18) to said drive shaft (13);
the second compartment (7) being also capable of containing a fluid (26) for wetting the cutting member (17) and the two compartments (6, 7) being disposed head-to-toe such that the opening of one lies substantially in the bottom plane of the other, and vice versa, the leak-proof partition (8) that separates the compartments being common to both compartments, characterised in that the top periphery of the stand is shaped to form a gutter (24) that recovers the fluid for wetting the cutting member, which gutter is connected to the bottom (16) of the second compartment (7) via a chute (25).

2. A machine according to claim 1,
characterised in that the first and second compartments (6, 7) constitute an integral assembly, each compartment having an opening (9, 15) opposite to the bottom (10, 16) of the said compartment.

3. A machine according to any one of claims 1 and 2,
characterised in that said stand (1) is implemented as a single piece of plastics material shaped by thermoforming.

4. A machine according to any one of claims 1 to 3,
characterised in that the drive motor (11) is an electric motor.

5. A machine according to any one of claims 1 to 4,
characterised in that the bottom periphery of the stand is shaped to form a reinforcing folded-back edge (4).

6. A machine according to one of claims 1 to 5,
characterised in that the stand includes two end walls (3) defining the stand, which end walls extend substantially perpendicularly to said leak-proof partition (8) and each of the end walls has a respective cavity (31) formed therein constituting a grip enabling the machine to be handled.

## Patentansprüche

1. Schneidmaschine, insbesondere eine Fayenceplatten-Schneidmaschine, mit
einem Gestell (1), in dem erste (6) und zweite (7) Kammern ausgebildet sind, die durch eine dichte Zwischenwand (8) getrennt sind und je einen Boden (10, 16) aufweisen,
einem Antriebsmotor (11), der in der ersten (6) der genannten Kammern angeordnet und mit einer Antriebswelle (13) versehen ist, welche die genannte dichte Zwischenwand (8) durchdringt, und
einem Schneidorgan (17), z.B. einer Trennscheibe, die zum Teil in der zweiten Kammer (7) angeordnet und mit der genannten Antriebswelle (13) gekuppelt (18) ist,
wobei die zweite Kammer (7) ein Fluid (26) zur Befeuchtung des Schneidorgans (17) aufzunehmen vermag und die beiden Kammern (6, 7) umgekehrt angeordnet sind, wobei die Öffnung der einen im wesentlichen in der Ebene des Bodens der anderen und umgekehrt angeordnet ist, und die sie voneinander trennende dichte Zwischenwand (8) ihnen gemeinsam ist, dadurch gekennzeichnet, daß die obere Peripherie des Gestells zu einer Rinne (24) zur Rückgewinnung des Fluids zum Befeuchten des Schneidorgans geformt ist, die mit dem Boden (16) der zweiten Kammer (7) durch eine Ablaufrinne (25) verbunden ist.

2. Maschine nach Anspruch 1,
dadurch gekennzeichnet, daß die erste (6) und die zweite (7) Kammer eine Einblockbaugruppe bilden, wobei sie je eine dem Boden (10, 16) der genannten Kammer gegenüberliegende Öffnung (9, 15) aufweisen.

3. Maschine nach einem der Ansprüche 1 und 2,
dadurch gekennzeichnet, daß das genannte Gestell (1) aus einem durch Warmformen gestalteten Kunststoff einstückig hergestellt ist.

4. Maschine nach einem der Ansprüche 1 bis 3,
dadurch gekennzeichnet, daß der Antriebsmotor (11) ein elektrischer Motor ist.

5. Maschine nach einem der Ansprüche 1 bis 4,
dadurch gekennzeichnet, daß die untere Peripherie des Gestells zu einem umgeschlagenen Verstärkungsrand (4) geformt ist.

6. Maschine nach einem der Ansprüche 1 bis 5,
dadurch gekennzeichnet, daß das Gestell zwei es begrenzende äußere Wände (3) aufweist, die sich im wesentlichen lotrecht zur genannten dichten Trennwand (8) erstrecken und in denen je eine Vertiefung (31) ausgebildet ist, die eine Handhabe zum Transportieren der Maschine bildet.
